# EUROPEAN PATENT SPECIFICATION

(11) **EP 3 329 092 B1**
(45) Date of publication and mention of the grant of the patent: **03.05.2023**
(21) Application number: 15906333.8
(22) Date of filing: 12.10.2015
(51) Int. Cl.: E21B 47/017, E21B 47/13, G01V 3/28, H01Q 1/42, H01Q 1/52

(54) **ELECTROMAGNETICALLY TRANSMISSIVE DIRECTIONAL ANTENNA SHIELD**
ELEKTROMAGNETISCH DURCHLÄSSIGE RICHTANTENNENABSCHIRMUNG
BLINDAGE D'ANTENNE DIRECTIONNELLE À TRANSMISSION ÉLECTROMAGNÉTIQUE

(43) Date of publication of application: 06.06.2018
(73) Proprietor: Halliburton Energy Services, Inc., Houston, TX 77032-3219 (US)
(72) Inventor: MA, Jin, Houston, TX 77064 (US); DONDERICI, Burkay, Houston, TX 77098 (US); WILSON, Glenn Andrew, Singapore 109703 (SG)
(74) Representative: Hoffmann Eitle
(86) International application number: PCT/US2015/055077
(87) International publication number: WO 2017/065722

(56) References cited:
- EP-A2- 2 317 345
- WO-A2-2011/038333
- GB-A- 2 344 127
- US-A1- 2003 155 915
- US-A1- 2003 155 923
- US-A1- 2011 316 542
- US-A1- 2012 249 149
- US-A1- 2015 061 682

## Description

### Background

Resistivity tools, used in the oil field in logging-while-drilling (LWD) systems, measurement-while-drilling (MWD) systems, wireline systems, and slickline systems, may use tilted loop antennae. Such antennae typically use a coil of wire wound around the body of the tool. It is a challenge to protect the tilted loop antennae and other components of the resistivity tool with a shield without unduly affecting the magnitude or direction of electromagnetic fields generated by such antennae.

GB 2344127 A discloses a drill collar with a metallic tubular structure, EP 2317345 A2 discloses a tool housing with circular slots and US 2012/0249149 A1 discloses a tubular body protecting a tilted antenna and having a pattern of windows arranged thereon.

### Brief Description of the Drawings

Fig. 1 is an elevation view of an illustrative LWD or MWD environment.
Fig. 2 is an elevation view of an illustrative wireline or slickline logging environment.
Fig. 3 is a plan view of a Geological Mapping (GM) tool sub.
Fig. 4 is a plan view of a GM tilted coil antenna-bobbin on a GM tool sub.
Fig. 5 is a plan view of the GM tilted coil antenna-bobbin of Fig. 4 with the bobbin removed to show soft magnetic material (e.g. ferrite) placed between the coil and the tool body.
Fig. 6 is a chart illustrating the directionality of the dipole created by the coil of Fig. 5.
Fig. 7 is a plan view of an electromagnetically transmissive shield that includes one line of circular holes cut into a metal cylinder that covers the antenna system where the circular holes trace the coil.
Fig. 8 is a chart illustrating the directionality of the antenna system with the electromagnetically transmissive shield shown in Fig. 7.
Fig. 9 is a plan view of an electromagnetically transmissive shield that includes one line of square holes cut into a metal cylinder that covers the antenna system, where the square holes are aligned with the tool axis and trace the coil.
Fig. 10 is a chart illustrating the directionality of the antenna system with the electromagnetically transmissive shield shown in Fig. 9.
Fig. 11 is a plan view of an electromagnetically transmissive shield that includes two or more rows of circular holes cut into a metal cylinder that covers the antenna system.
Fig. 12 is a chart illustrating the directionality of the antenna system with the electromagnetically transmissive shield shown in Fig. 11.
Fig. 13 is a plan view of an electromagnetically transmissive shield that includes two or more rows of square holes cut into a metal cylinder that covers the antenna system, where the square holes are aligned with the tool axis and trace the coil.
Fig. 14 is a chart illustrating the directionality of the antenna system with the electromagnetically transmissive shield shown in Fig. 13.
Fig. 15 is a plan view of an electromagnetically transmissive shield that includes a periodic array of circular holes cut into a metal cylinder that covers the antenna system.
Fig. 16 is a chart illustrating the directionality of the antenna system with the electromagnetically transmissive shield shown in Fig. 15.
Fig. 17 is a plan view of an electromagnetically transmissive shield that includes a periodic array of square holes cut into a metal cylinder that covers the antenna system, where the square holes are aligned with the tool axis.
Fig. 18 is a chart illustrating the directionality of the antenna system with the electromagnetically transmissive shield shown in Fig. 17.
Fig. 19 is a plan view of an example of an electromagnetic transmissive shield that includes multiple axially-aligned slots cut into a metal cylinder in which dipole directionality is not preserved.
Fig. 20 is a chart illustrating the directionality of the antenna system with the electromagnetically transmissive shield shown in Fig. 19.
Fig. 21 is a plan view of an example of an electromagnetic transmissive shield that includes three rows of nine rectangular slots cut into a metal cylinder in which dipole directionality is not preserved.
Fig. 22 is a chart illustrating the directionality of the antenna system with the electromagnetically transmissive shield shown in Fig. 21.
Fig. 23 is a plan view of an electromagnetic transmissive shield that includes a row of 9 slots cut into a metal cylinder in which dipole directionality is not preserved.
Fig. 24 is a chart illustrating the directionality of the antenna system with the electromagnetically transmissive shield shown in Fig. 23.
Fig. 25 is a plan view of an electromagnetic transmissive shield that includes a band of curved rectangular slots cut into a metal cylinder in which dipole directionality is not preserved.
Fig. 26 is a chart illustrating the directionality of the antenna system with the electromagnetically transmissive shield shown in Fig. 25.

### Detailed Description

The following detailed description illustrates embodiments of the present disclosure. These embodiments are described in sufficient detail to enable a person of ordinary skill in the art to practice these embodiments without undue experimentation. It should be understood, however, that the embodiments and examples described herein are given by way of illustration only, and not by way of limitation. It should also be understood that various changes, substitutions, and alterations could be made hereto without departing from the scope of the invention, as defined by the appended claims. Therefore, the description that follows is not to be taken as limiting on the scope of the appended claims. In particular, an element associated with a particular embodiment should not be limited to association with that particular embodiment but should be assumed to be capable of association with any embodiment discussed herein.

Further, while this disclosure describes a land-based production system, it will be understood that the equipment and techniques described herein are applicable in sea-based systems, multi-lateral wells, all types of production systems, all types of rigs, wired drillpipe environments, coiled tubing (wired and unwired) environments, wireline environments, and similar environments.

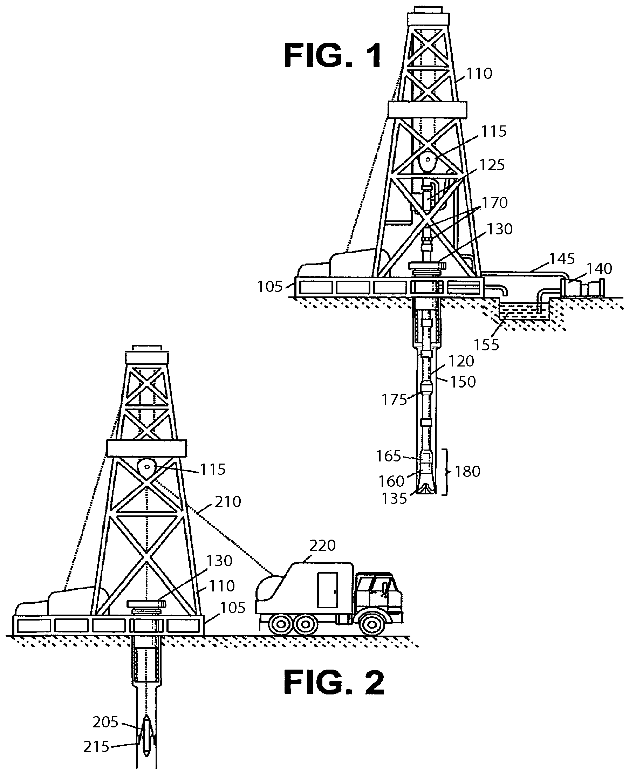

The disclosed tool configurations and operations are best understood in the context of the larger systems in which they operate. Accordingly, an illustrative LWD or MWD environment is shown in Fig. 1. A drilling platform 105 is equipped with a derrick 110 that supports a hoist 115 for raising and lowering a drill string 120. The hoist 115 suspends a top drive 125 that is used to rotate the drill string 120 and to lower the drill string through the well head 130. Connected to the lower end of the drill string 120 is a drill bit 135. The bit 135 is rotated and drilling is accomplished by rotating the drill string 120, by use of a downhole motor near the drill bit, or by both methods. Drilling fluid, termed "mud", is pumped by mud recirculation equipment 140 through supply pipe 145, through top drive 125, and down through the drill string 120 at high pressures and volumes to emerge through nozzles or jets in the drill bit 135. The mud then travels back up the hole via an annulus formed between the exterior of the drill string 120 and the borehole wall 150, through a blowout preventer (not specifically shown), and into a mud pit 155 on the surface. On the surface, the drilling mud is cleaned and then recirculated by recirculation equipment 140. The drilling mud is used to cool the drill bit 135, to carry cuttings from the base of the bore to the surface, and to balance the hydrostatic pressure in the rock formations.

In wells employing acoustic telemetry for LWD or MWD, downhole sensors (including an electromagnetic resistivity logging tool 160) are coupled to an acoustic telemetry transmitter 165 that transmits telemetry signals in the form of acoustic vibrations in the tubing wall of drill string 120. An acoustic telemetry receiver array 170 may be coupled to tubing below the top drive 125 to receive transmitted telemetry signals. One or more repeater modules 175 may be optionally provided along the drill string to receive and retransmit the telemetry signals. The repeater modules 175 include both an acoustic telemetry receiver array and an acoustic telemetry transmitter configured similarly to receiver array 170 and the transmitter 165.

The electromagnetic resistivity logging tool 160 may be integrated into the bottom hole assembly (BHA) 180 near the bit 135. As the bit extends the borehole through the formations, downhole sensors collect measurements relating to various formation properties as well as the tool orientation and position and various other drilling conditions. The orientation measurements may be performed using an azimuthal orientation indicator, which may include magnetometers, inclinometers, and/or accelerometers, though other sensor types such as gyroscopes may be used. In some embodiments, the tool includes a 3-axis fluxgate magnetometer and a 3-axis accelerometer. The electromagnetic resistivity logging tool 160 may take the form of a drill collar, i.e., a thick-walled tubular that provides weight and rigidity to aid the drilling process.

Fig. 2 is an elevation view of an illustrative wireline or slickline logging environment. At various times during the drilling process, the drill string 120 may be removed from the borehole as shown in Fig. 2. Once the drill string has been removed, logging operations can be conducted using a wireline logging tool 205, i.e., a sensing instrument sonde suspended by a cable 210 having conductors for transporting power to the tool and telemetry from the tool to the surface. An electromagnetic resistivity measuring portion of the logging tool 205 may have centralizing arms 215 that center the tool within the borehole as the tool is pulled uphole. The centralizing arms 215 may be equipped with sensor pads that are maintained in close contact with the borehole wall to gather logging data. A logging facility 220 collects measurements from the logging tool 210, and includes computing facilities for processing and storing the measurements gathered by the logging tool.

This disclosure generally relates to the design of electromagnetic resistivity tools used in LWD and MWD systems and specially relates to methods of shielding antennae for transmitting or receiving electromagnetic (EM) fields.

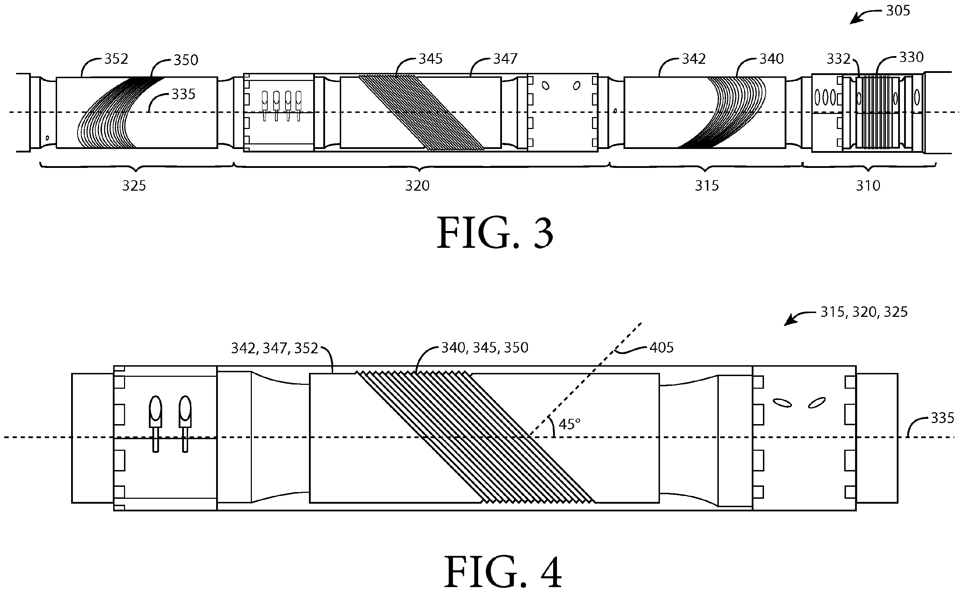

Fig. 3 is a plan view of a Geological Mapping (GM) tool sub 305 provided by Halliburton. In one or more embodiments, the GM tool sub 305 includes a plurality of GM antenna-bobbins 310, 315, 320, 325. The example in Fig. 3 consists of a first GM antenna-bobbin 310 that includes a multi-turn coaxial loop (coil) antenna 330 wound on a bobbin 332, in which the axis of the multi-turn loop antenna 330 (i.e., a line substantially perpendicular to (i.e., perpendicular within 1 degree, 2 degrees or 5 degrees) a plane containing one of the coils of the multi-turn coaxial loop antenna 330) is coincident with or substantially parallel to (i.e., parallel within 1 degree, 2 degrees or 5 degrees) a longitudinal axis 335 of the GM tool sub 305. The example in Fig. 3 also includes a plurality of GM antenna-bobbins 315, 320, 325 having multi-turn tilted loop (coil) antennae 340, 345, 350 wound on respective bobbins 342, 347, 352 that have 45° dip with respect to the axis 335 of the GM tool sub 305 and are azimuthally offset with each other by 120°.

The GM tool sub 305 can be used as a transmitter sub or a receiver sub. That is, the GM antennas 330, 340, 345, 350 can be transmitters or receivers.

In one or more embodiments, the GM tool sub 305 is spaced along the BHA with other similar GM tool subs (not shown) at nominal spacings of 25 feet, 50 feet, and 100 feet (1 foot = 30.48 cm).

Fig. 4 is a plan view of one of the GM antenna-bobbins 315, 320, 325 with a tilted coil antenna 340, 345, 350. The tilted coil antennas 340, 345, 350 are oriented to generate a magnetic dipole moment with a directivity at angle of 45 degrees relative to the longitudinal axis 335 of the GM tool sub 305. This dipole directionality is realized by winding the coils 340, 345, 350 such that an axis 405 of the coils 340, 345, 350 is at 45 degree angle relative to the longitudinal axis 335 of the GM tool sub 305.

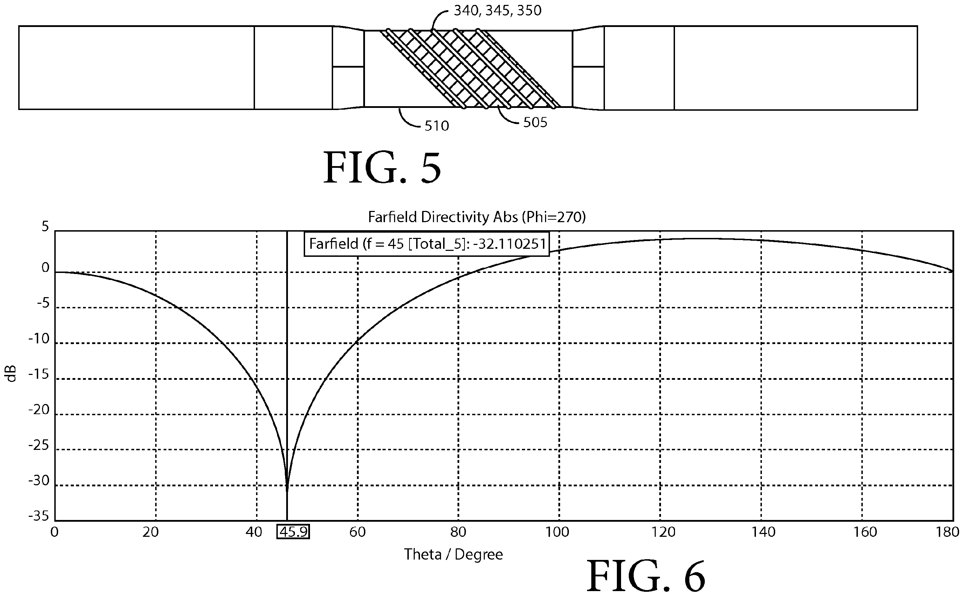

Fig. 5 is a plan view of the GM antenna-bobbins 315, 320, 325 of Fig. 4 with the bobbin 342, 347, 352 removed to show a soft magnetic material (e.g. ferrite, laminated permalloy, mu metal, metallic glass) 505 placed between the coil 340, 345, 350 (only the inner-most windings of the coil 340, 345, 350 are shown in Fig. 5) and the tool body 510, which increases the inductance of the coils 340, 345, 350. To preserve the dipole directionality at 45 degrees relative to the tool axis, the soft magnetic material 505 is aligned in strips substantially perpendicular (i.e., within 5 degrees, 10 degrees, or 15 degrees) to the coil 340, 345, 350.

Fig. 6 is a chart illustrating the directionality of the dipole created by the coil antenna 340, 345, 350 of Fig. 5. The directionality shows the effective farfield angle of the coil antenna 340, 345, 350 is 45.9 degrees.

Previous disclosures have described protecting the coil antenna 340, 345, 350 by coating it in a polymer (e.g., polyether ether ketone (PEEK)), a polymer-ceramic blend, or a ceramic). The advantage of such a material is that it has high mechanical strength and is electrically resistive and it protects the antenna system (defined to be the coil antenna 340, 345, 350, the soft magnetic material 505) while not unduly attenuating the EM fields transmitted or received. However, in extremely harsh downhole drilling conditions, such non-metallic materials may still be easily wear out. As a result, a transmissive metallic shield may be a better choice for the mechanical protection of coil antennas.

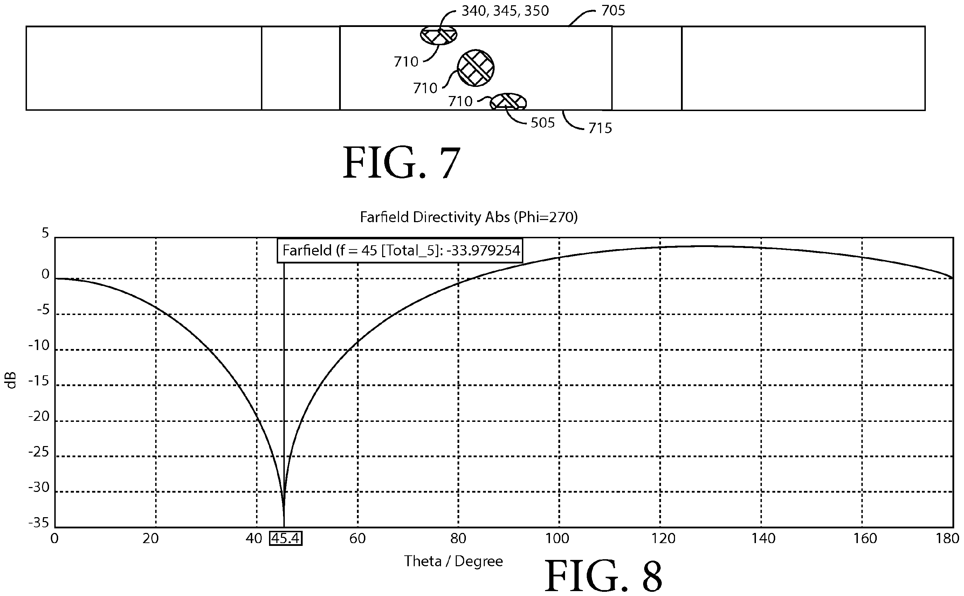

In this disclosure, an electromagnetically transmissive shield 705, 905, 1105, 1305, 1505, 1705 described below in connection with Figs. 7, 9, 11, 13, 15, and 17, is placed around the tool body 510, protecting the coil antenna 340, 345, 350 and the soft magnetic material 505 from the harsh downhole environment. The electromagnetically transmissive shield 705, 905, 1105, 1305, 1505, 1705 has a longitudinal axis that, when installed as described below, substantially coincides (i.e., is parallel within 1, 5, or 10 degrees) with the longitudinal axis 335 of the GM tool sub 305. The electromagnetically transmissive metal shield includes a periodic array of circular or square holes cut into a metallic cylinder that covers the antenna system. The circular or square holes are of such a position and/or size so as to not significantly attenuate EM fields or materially change the directionality of the directional antenna. A circular hole is defined to have a circumferential surface that is, at all points, within 0.1, 0.5, or 1.0 percent of a radius of a circular cylinder. A square hole is defined to have a circumferential surface that is, at all points, within 0.1, 0.5, or 1.0 percent of an edge of a square cylinder.

Square slots and circular slots have the characteristic that their dimensions measured along two perpendicular axes through the centroid of the slots are equal. That is, the dimensions along two axes that go through the centroid (or center) of a circle (i.e., the radius or diameter of the circle) are equal. Similarly, the dimensions along two axes that go through the centroid of a square (e.g., the length of two adjacent sides of the square) are equal. Here, square and circle shapes are nominated as examples because of their simple structure. However, other polygon shapes which have multiple equal axes going through the centroid, such as a cross, hexagon, etc., may also be used and are interchangeable with the square and circular shapes described below.

The circular or square holes cut into the metal cylinder that cover the antenna system are aligned in a periodic array that is periodic axially and periodic azimuthally relative to the longitudinal axis 335 of the GM tool sub 305. An array of circular or square holes is axially periodic relative to the longitudinal axis 335 of the GM tool sub 305 if perpendicular projections of the centroids of the circular or square holes onto the longitudinal axis 335 of the GM tool sub 305 are evenly spaced along the longitudinal axis 335 of the GM tool sub 305. An array of circular or square holes is azimuthally periodic relative to the longitudinal axis 335 of the GM tool sub 305 if the centroids of the circular or square holes are evenly spaced azimuthally around the longitudinal axis 335 of the GM tool sub 305.

Fig. 7 is a plan view of an electromagnetically transmissive shield 705. Note that, for clarity of presentation and to show the relationship between the holes in the shield discussed below and the coils 340, 345, 350 and the soft magnetic material 505, only the innermost winding of the coil antenna 340, 345, 350 is visible in Figs. 7, 9, 11, 13, 15, 17, 19, 21, 23, and 25. In one or more embodiments, the electromagnetic shield 705 includes one line of circular holes 710 cut into a metal cylinder 715 that covers the antenna system. The circular holes 710 trace the coil antenna 340, 345, 350. That is, a projection of a curve through the centroids of the circular holes 710 onto the soft magnetic material 505 follows a substantially (i.e., within 2, 5, or 10 percent) parallel path to the coil antenna 340, 345, 350. The coil antenna 340, 345, 350 is tilted at 45 degrees and there are six circular holes 710 equally spaced azimuthally each having a radius of 40 millimeters (mm). The circular holes 710 are azimuthally periodic and axially periodic.

Fig. 8 is a chart illustrating the directionality of the antenna system with the electromagnetically transmissive shield 705 shown in Fig. 7. As can be seen, dipole directionality is preserved near 45 degrees.

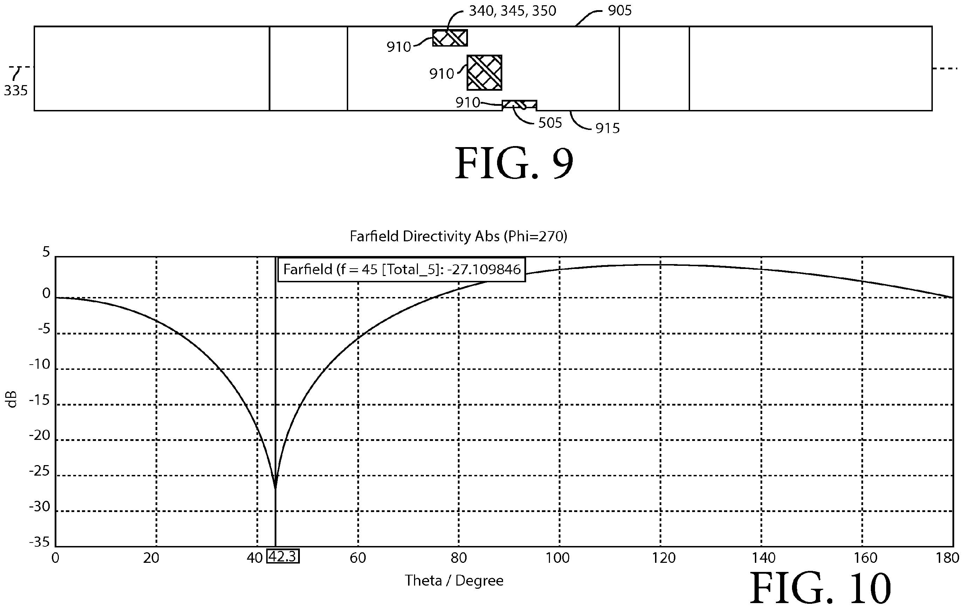

Fig. 9 shows an electromagnetically transmissive shield 905 including one line of square holes 910 cut into a metal cylinder 915 that covers the antenna system. The square holes 910 are aligned with the tool axis (i.e., the edges of the square holes 910 are parallel to or perpendicular to, within 2, 5, or 10 degrees, the tool axis 335) and trace the coil. The thickness of the metal cylinder 915 is 2 mm, the coil antenna 340, 345, 350 is tilted at 45 degrees, and there are six 40 mm × 40 mm square holes 910. The square holes 910 are azimuthally periodic and axially periodic.

Fig. 10 is a chart illustrating the directionality of the antenna system with the electromagnetically transmissive shield 905 shown in Fig. 9. As can be seen, dipole directionality near 45 degrees is preserved.

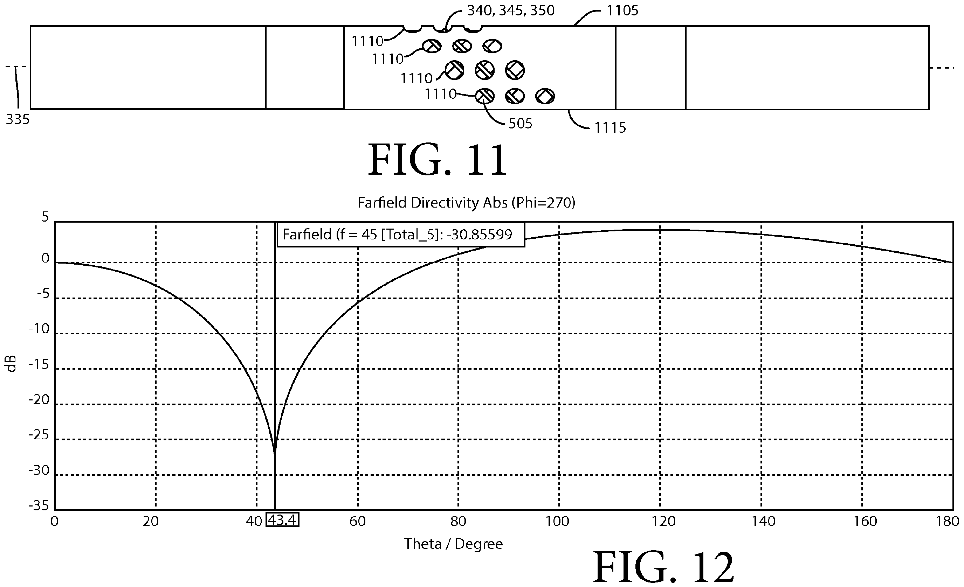

Fig. 11 is a plan view of an electromagnetically transmissive shield 1105 including two or more rows of circular holes 1110 cut into a metal cylinder 1115 that covers the antenna system. The circular holes 1110 trace the coil antenna 340, 345, 350. The coil antenna 340, 345, 350 is tilted at 45 degrees. The metal cylinder 1115 is 2 mm thick. There are 3 bands of 9 circular holes 1110 that are azimuthally and axially periodic. Each of the circular holes 1110 has a radius of 20 mm.

Fig. 12 is a chart illustrating the directionality of the antenna system with the electromagnetically transmissive shield 1105 shown in Fig. 11. As can be seen, dipole directionality near 45 degrees is preserved.

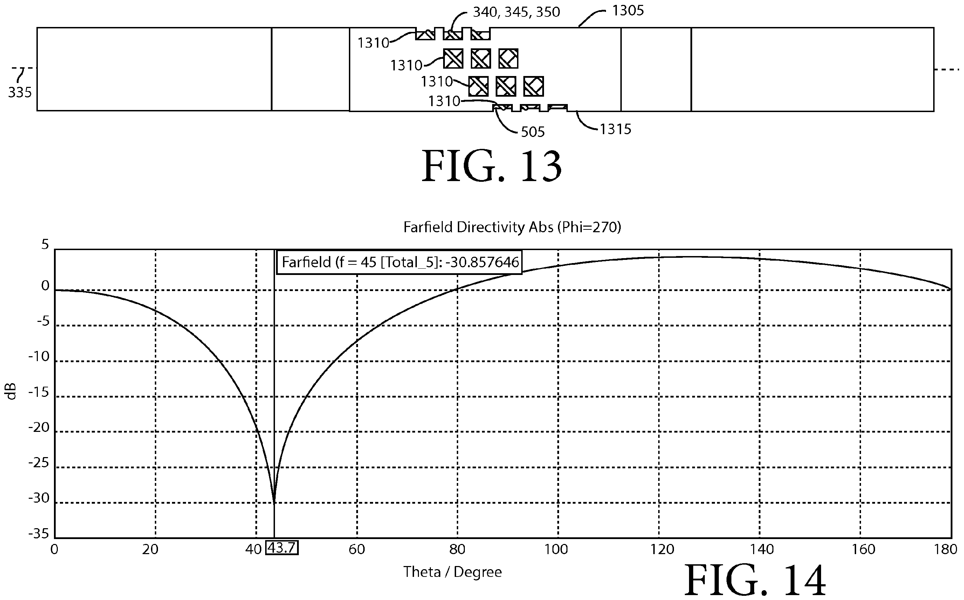

Fig. 13 is a plan view of an electromagnetically transmissive shield 1305 including two more rows of square holes 1310 cut into a metal cylinder 1310 that covers the antenna system, where the square holes are aligned with the tool axis 335 and trace the coil antenna 340, 345, 350. The coil antenna 340, 345, 350 is tilted at 45 degrees. The metal cylinder 1310 is 2 mm thick. There are 3 bands of nine 20 mm × 20 mm square holes 1310 that are azimuthally and axially periodic.

Fig. 14 is a chart illustrating the directionality of the antenna system with the electromagnetically transmissive shield 1305 shown in Fig. 13. As can be seen, dipole directionality near 45 degrees is preserved.

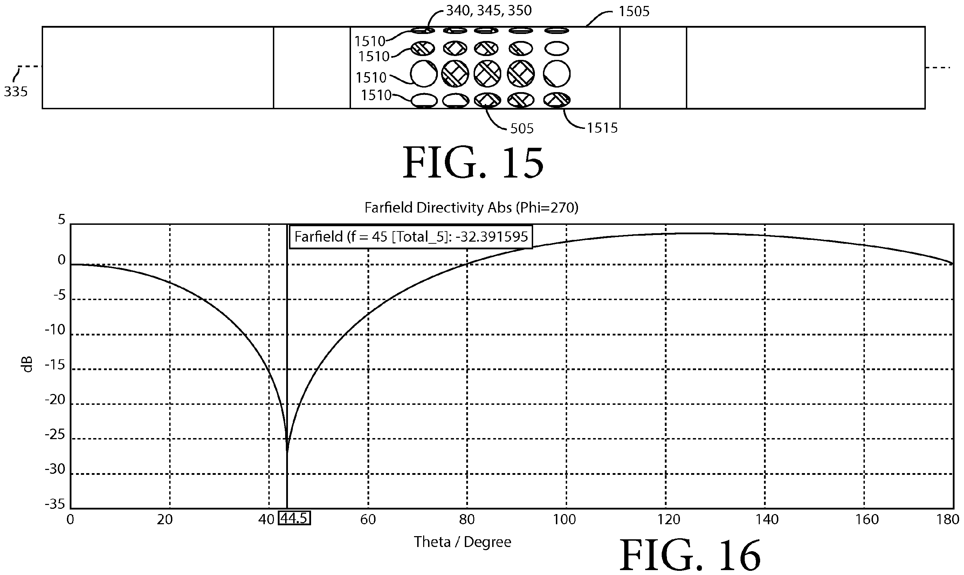

Fig. 15 is a plan view of an electromagnetically transmissive shield 1505 including a periodic array of circular holes 1510 cut into a metal cylinder 1515 that covers the antenna system. The coil antenna 340, 345, 350 is tilted at 45 degrees. There are 5 bands of 9 circular holes 1510 that are azimuthally perioidic and axially periodic. Each of the circular holes has a radius of 20 mm. The thickness of the metal cylinder 1515 is 2 mm.

Fig. 16 is a chart illustrating the directionality of the antenna system with the electromagnetically transmissive shield 1505 shown in Fig. 15. As can be seen, dipole directionality near 45 degrees is preserved.

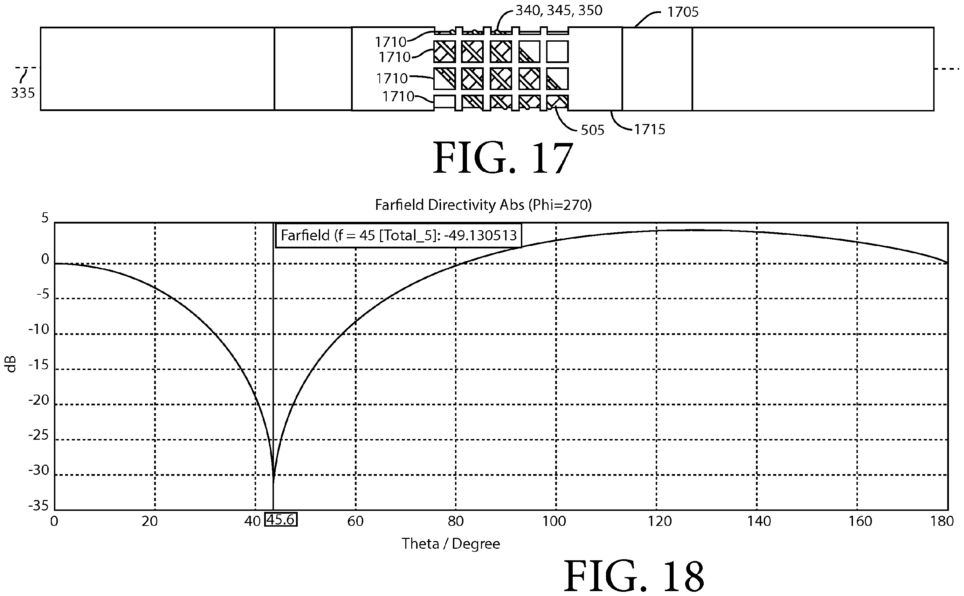

Fig. 17 is a plan view of an electromagnetically transmissive shield 1705 including a periodic array of square holes 1710 cut into a metal cylinder 1715 that covers the antenna system, where the square holes 1710 are aligned with the tool axis. The coil antenna 340, 345, 350 is tilted at 45 degrees. There are 5 bands of nine 20 mm × 20 mm square holes 1710 that are azimuthally and axially periodic. The thickness of the metal cylinder 1715 is 2 mm.

Fig. 18 is a chart illustrating the directionality of the antenna system with the electromagnetically transmissive shield 1705 shown in Fig. 17. As can be seen, dipole directionality near 45 degrees is preserved.

In one or more embodiments, the metal shield 915, 1115, 1315, 1515, 1715 is fabricated from any suitable metal or alloy ( e.g., Inconel alloy).

In one or more embodiments, the volume between the coil 340, 345, 350 and the inner surface of the shield 915, 1115, 1315, 1515, 1715 is filled with an electrically resistive and mechanically strong material, such as PEEK.

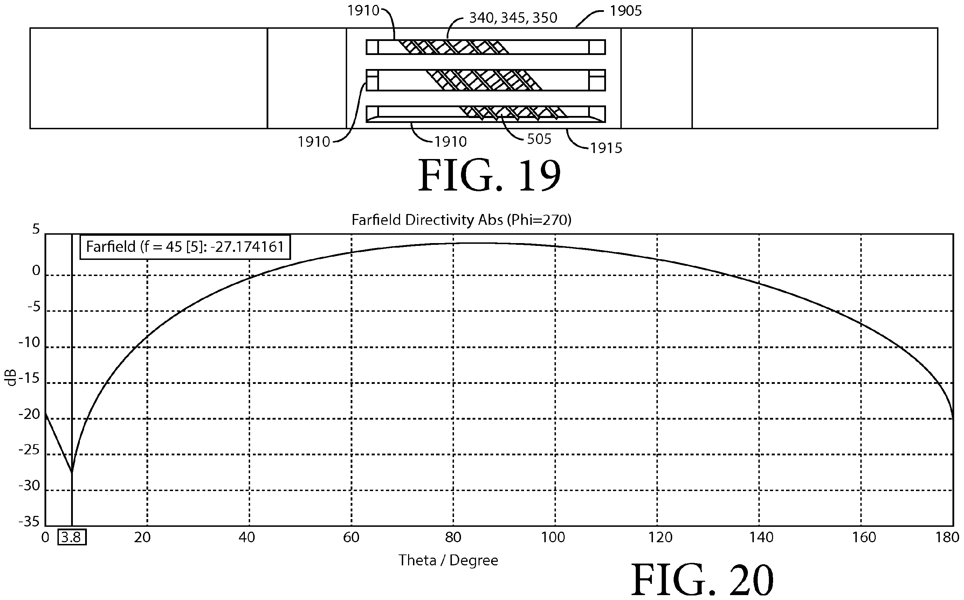

Dipole directivity may not be preserved with other transmissive shield designs, as illustrated in Figs. 19-26.

Fig. 19 is a plan view of an electromagnetic transmissive shield 1905 consisting of multiple axially-aligned slots 1905 cut into a metal cylinder 1910. The slots 1905 are 320 mm long and 20 mm wide (i.e., the slots 1905 are not square) and are azimuthally periodic but not axially periodic (i.e., all of the slots 1905 are at the same point on the longitudinal axis 335). The thickness of the metal cylinder is 2 mm.

Fig. 20 is a chart illustrating the directionality of the antenna system with the electromagnetically transmissive shield 1905 shown in Fig. 19. As can be seen, the dipole directionality of 45 degrees is not preserved in this arrangement but is instead is approximately 4 degrees.

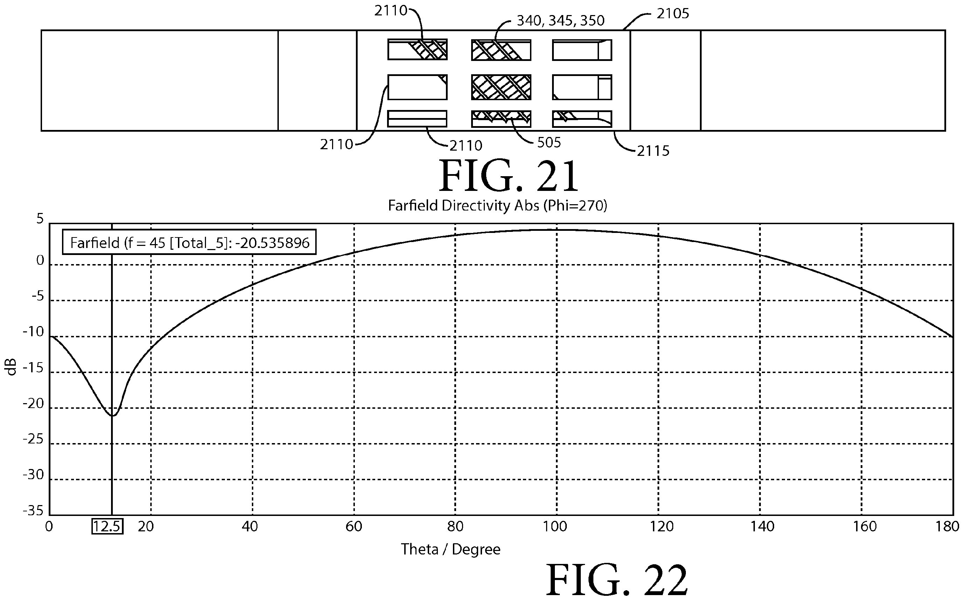

Fig. 21 is a plan view of an electromagnetic transmissive shield 2105 consisting of three rows of nine rectangular slots 2110 cut into a metal cylinder 2115. The rectangular slots 2110 are 80 mm in length and 20 mm wide (i.e., the slots 2105 are not square) and are azimuthally periodic and axially periodic. The thickness of the metal cylinder 2110 is 2 mm.

Fig. 22 shows the directionality of the antenna system with the electromagnetically transmissive shield 2105 shown in Fig. 21. As can be seen, dipole directionality of 45 degrees is not preserved but is instead approximately 13 degrees.

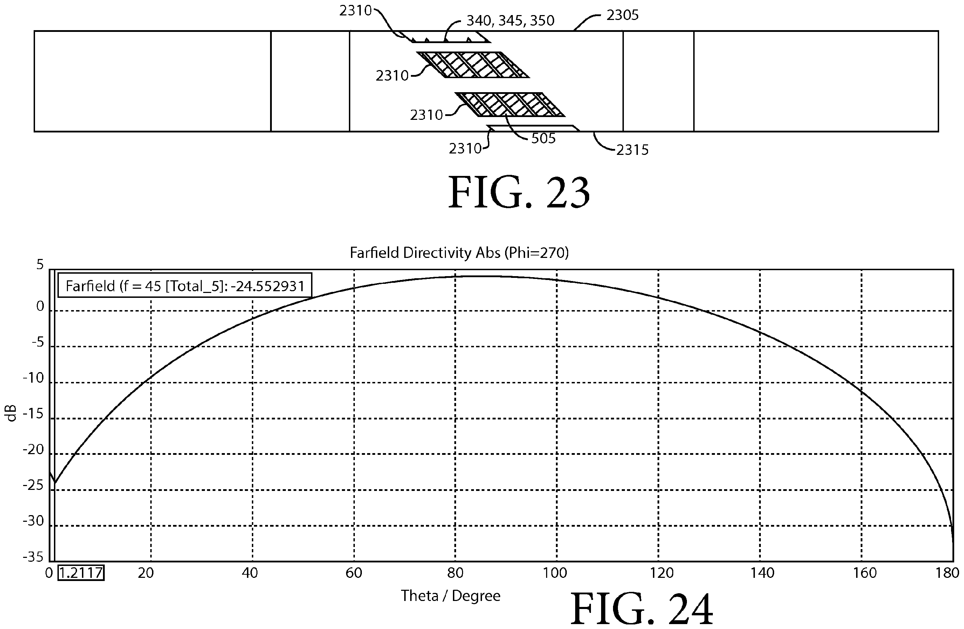

Fig. 23 is a plan view of an electromagnetic transmissive shield 2305 consisting of a row of 9 slots 2310 cut into a metal cylinder 2315. The slots 2305 are parallelograms (i.e., not squares), with two 80 mm sides and two 20 mm sides. The slots 2305 are azimuthally periodic and axially periodic. The thickness of the metal cylinder 2310 is 2 mm.

Fig. 24 is a chart illustrating the directionality of the antenna system with the electromagnetically transmissive shield shown in Fig. 23. As can be seen, dipole directionality of 45 degrees is not preserved but is instead approximately 1 degree.

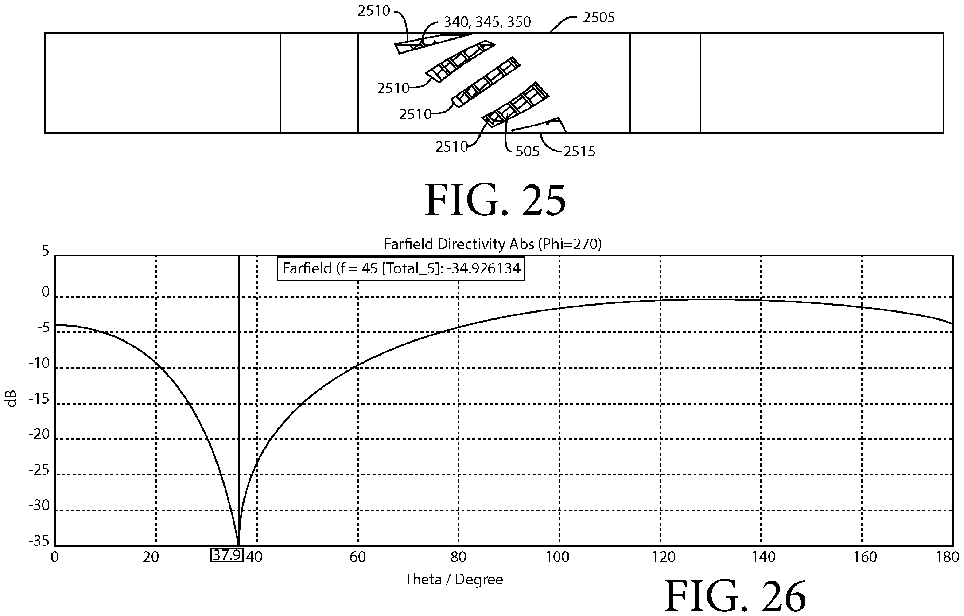

Fig. 25 is a plan view of an electromagnetic transmissive shield 2505 consisting of a band of curved rectangular slots 2510 cut into a metal cylinder 2515. The slots 2510 are axially periodic and azimuthally periodic. The rectangular slots 2505 are 80 mm in length and 12 mm in width. The thickness of the metal cylinder 2510 is 2 mm.

Fig. 26 is a chart illustrating the directionality of the antenna system with the electromagnetically transmissive shield shown in Fig. 25. As can be seen, dipole directionality may be preserved by this design (approximately 38 degrees). However, since this design involves curved slots on the shield, it may increase the mechanical difficulty for manufacturing and machining.

In one example not forming part of the invention. an apparatus includes a metal cylinder defining a longitudinal axis and having a plurality of slots. Each slot has the same dimensions along two perpendicular axes through a centroid of the slot. The plurality of slots is azimuthally periodic relative to the longitudinal axis of the metal cylinder and axially periodic relative to the longitudinal axis of the metal cylinder.

Implementations may include one or more of the following. The plurality of slots may include square slots. The plurality of slots may include circular slots. The plurality of slots may include a single row of slots. The plurality of slots may include two or more rows of slots.

In the invention, an apparatus configured for a downhole tool includes an antenna system to generate an electromagnetic field with a desired magnitude and in a desired direction. The apparatus includes a shield to protect the antenna system. The shield has a metal cylinder that covers the antenna system and has a longitudinal axis and a plurality of slots. Each slot has the same dimensions along two perpendicular axes through a centroid of the slot. The plurality of slots is azimuthally periodic relative to the longitudinal axis of the metal cylinder and axially periodic relative to the longitudinal axis of the metal cylinder.

The antenna system includes a coil of wire wound at an angle of substantially 45 degrees with respect to the longitudinal axis of the metallic cylinder. The plurality of slots are arranged along a curve substantially parallel to the coil. The plurality of slots may include square slots. The plurality of slots may include circular slots. The plurality of slots may include a single row of slots. The plurality of slots may include two or more rows of slots.

In one example not forming part of the invention, a method includes forming a plurality of slots in a metal cylinder having a longitudinal axis. Each slot has the same dimensions along two perpendicular axes through a centroid of the slot. The plurality of slots are azimuthally periodic relative to the longitudinal axis of the metal cylinder and azimuthally periodic relative to the longitudinal axis of the metal cylinder.

Implementations may include one or more of the following. Forming the plurality of slots may include forming square slots. Forming the plurality of slots may include forming circular slots. Forming the plurality of slots may include forming a single row of slots. Forming the plurality of slots may include forming two or more rows of slots.

In the invention, a method includes creating a shield by forming a plurality of slots in a metal cylinder having a longitudinal axis. Each slot has the same dimensions along two perpendicular axes through a centroid of the slot. The plurality of slots are azimuthally periodic relative to the longitudinal axis of the metal cylinder and axially periodic relative to the longitudinal axis of the metal cylinder. The method includes positioning the shield around an antenna system of a downhole tool.

The antenna system includes a coil of wire wound at an angle of substantially 45 degrees with respect to the longitudinal axis of the metallic cylinder. The plurality of slots are arranged along a curve substantially parallel to the coil. The plurality of slots may include square slots. The plurality of slots may include circular slots. The plurality of slots may include a single row of slots. The plurality of slots may include two or more rows of slots. The method may include coupling the combined antenna system and shield to a drill string in a measurement-while-drilling system. The method may include coupling additional combined antenna systems and shield to the drill string to form a resistivity measuring tool. The method may include using the resistivity tool to measure the resistivity of an underground formation.

The word "coupled" herein means a direct connection or an indirect connection.

The text above describes one or more specific embodiments of a broader invention. The invention also is carried out in a variety of alternate embodiments and thus is not limited to those described here. The foregoing description of an embodiment of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description, but rather by the claims appended hereto.

## Claims

1. An apparatus configured for a downhole tool, comprising:
an antenna system (305) to generate an electromagnetic field with a desired magnitude and in a desired direction; and
a shield (705) to protect the antenna system, the shield having a metal cylinder (715) that covers the antenna system, wherein the metal cylinder defines a longitudinal axis (335) and has a plurality of slots (910), the antenna system comprises a coil (340) of wire wound at an angle of substantially 45 degrees with respect to a longitudinal axis defined by the metal cylinder, the plurality of slots being arranged along a curve substantially parallel to the coil, azimuthally periodic relative to the longitudinal axis of the metal cylinder and axially periodic relative to the longitudinal axis of the metal cylinder,
**characterized by** each slot having the same dimensions along two perpendicular axes through a centroid of the slot.

2. The apparatus of claim 1, wherein the plurality of slots comprises square slots, circular slots, a single row of slots, and/or two or more rows of slots.

3. A method, comprising:
creating a shield by forming a plurality of slots in a metal cylinder defining a longitudinal axis, the plurality of slots being azimuthally periodic relative to the longitudinal axis of the metal cylinder and axially periodic relative to the longitudinal axis of the metal cylinder; and
positioning the shield around an antenna system of a downhole tool,
wherein the antenna system comprises a coil of wire wound at an angle of substantially 45 degrees with respect to the longitudinal axis of the metal cylinder and the plurality of slots are arranged along a curve substantially parallel to the coil, **characterized by** each slot having the same dimensions along two perpendicular axes through a centroid of the slot.

4. The method of claim 3, wherein the plurality of slots comprises square slots, circular slots, a single row of slots, and/or two or more rows of slots.

5. The method of any of claims 3-4, further comprising coupling the combined antenna system and shield to a drill string in a measurement-while-drilling system.

6. The method of claim 5, further comprising:
coupling additional combined antenna systems and shield to the drill string to form a resistivity measuring tool; and
using the resistivity tool to measure the resistivity of an underground formation.

## Patentansprüche

1. Vorrichtung, die für ein Bohrlochwerkzeug konfiguriert ist, umfassend:
ein Antennensystem (305) zum Erzeugen eines elektromagnetischen Feldes mit einer gewünschten Größe und einer gewünschten Richtung; und
eine Abschirmung (705) zum Schutz des Antennensystems, wobei die Abschirmung einen Metallzylinder (715) aufweist, der das Antennensystem abdeckt, wobei der Metallzylinder eine Längsachse (335) definiert und eine Vielzahl von Schlitzen (910) aufweist, wobei das Antennensystem eine Spule (340) aus Draht umfasst, die in einem Winkel von im Wesentlichen 45 Grad in Bezug auf eine durch den Metallzylinder definierte Längsachse gewickelt ist, wobei die Vielzahl von Schlitzen entlang einer Kurve angeordnet ist, die im Wesentlichen parallel zu der Spule, azimutal periodisch zur Längsachse des Metallzylinders und axial periodisch relativ zur Längsachse des Metallzylinders ist,
**dadurch gekennzeichnet, dass** jeder Schlitz die gleichen Abmessungen entlang zweier senkrechter Achsen durch einen Schwerpunkt des Schlitzes aufweist.

2. Vorrichtung nach Anspruch 1, wobei die Vielzahl von Schlitzen quadratische Schlitze, kreisförmige Schlitze, eine einzelne Reihe von Schlitzen und/oder zwei oder mehr Reihen von Schlitzen umfasst.

3. Verfahren, umfassend:
Erstellen einer Abschirmung durch Bilden einer Vielzahl von Schlitzen in einem Metallzylinder, der eine Längsachse definiert, wobei die Vielzahl von Schlitzen relativ zur Längsachse des Metallzylinders azimutal periodisch und relativ zur Längsachse des Metallzylinders axial periodisch ist; und
Positionieren der Abschirmung um ein Antennensystem eines Bohrlochwerkzeugs herum,
wobei das Antennensystem eine Spule aus Draht umfasst, die in einem Winkel von im Wesentlichen 45 Grad in Bezug auf die Längsachse des Metallzylinders gewickelt ist, und die Vielzahl von Schlitzen entlang einer Kurve angeordnet ist, die im Wesentlichen parallel zu der Spule ist, **dadurch gekennzeichnet, dass** jeder Schlitz die gleichen Abmessungen entlang zweier senkrechter Achsen durch einen Schwerpunkt des Schlitzes aufweist.

4. Verfahren nach Anspruch 3, wobei die Vielzahl von Schlitzen quadratische Schlitze, kreisförmige Schlitze, eine einzelne Reihe von Schlitzen und/oder zwei oder mehr Reihen von Schlitzen umfasst.

5. Verfahren nach einem der Ansprüche 3 bis 4, ferner umfassend das Koppeln des kombinierten Antennensystems und der Abschirmung mit einem Bohrstrang in einem System zum Messen während des Bohrens.

6. Verfahren nach Anspruch 5, ferner umfassend:
Koppeln zusätzlicher kombinierter Antennensysteme und Abschirmung mit dem Bohrstrang, um ein Werkzeug zum Messen des spezifischen Widerstands zu bilden; und
Verwenden des Widerstandswerkzeugs zum Messen des Widerstands einer unterirdischen Formation.

## Revendications

1. Appareil conçu pour un outil de fond de puits, comprenant :
un système d'antenne (305) pour générer un champ électromagnétique avec une amplitude souhaitée et dans une direction souhaitée ; et
un blindage (705) pour protéger le système d'antenne, le blindage ayant un cylindre métallique (715) qui recouvre le système d'antenne, dans lequel le cylindre métallique définit un axe longitudinal (335) et a une pluralité de fentes (910), le système d'antenne comprend une bobine (340) de fil enroulé selon un angle de sensiblement 45 degrés par rapport à un axe longitudinal défini par le cylindre métallique, la pluralité de fentes étant agencée le long d'une courbe sensiblement parallèle à la bobine, azimutalement périodique par rapport à l'axe longitudinal du cylindre métallique et axialement périodique par rapport à l'axe longitudinal du cylindre métallique,
**caractérisé par** chaque fente ayant les mêmes dimensions le long de deux axes perpendiculaires passant par un centroïde de la fente.

2. Appareil selon la revendication 1, dans lequel la pluralité de fentes comprend des fentes carrées, des fentes circulaires, une seule rangée de fentes et/ou deux rangées de fentes ou plus.

3. Procédé, comprenant :
la création d'un blindage en formant une pluralité de fentes dans un cylindre métallique définissant un axe longitudinal, la pluralité de fentes étant azimutalement périodique par rapport à l'axe longitudinal du cylindre métallique et axialement périodique par rapport à l'axe longitudinal du cylindre métallique ; et
le positionnement du blindage autour d'un système d'antenne d'un outil de fond de puits,
dans lequel le système d'antenne comprend une bobine de fil enroulé selon un angle de sensiblement 45 degrés par rapport à l'axe longitudinal du cylindre métallique et la pluralité de fentes est agencée le long d'une courbe sensiblement parallèle à la bobine, **caractérisé par** chaque fente ayant les mêmes dimensions le long de deux axes perpendiculaires passant par un centroïde de la fente.

4. Procédé selon la revendication 3, dans lequel la pluralité de fentes comprend des fentes carrées, des fentes circulaires, une seule rangée de fentes et/ou deux rangées de fentes ou plus.

5. Procédé selon l'une quelconque des revendications 3 et 4, comprenant en outre le couplage du système d'antenne et du blindage combinés à un train de forage dans un système de mesure en cours de forage.

6. Procédé selon la revendication 5, comprenant en outre :
le couplage de systèmes d'antenne et de blindage combinés supplémentaires au train de forage pour former un outil de mesure de résistivité ; et
l'utilisation de l'outil de résistivité pour mesurer la résistivité d'une formation souterraine.
